# EUROPÄISCHE PATENTSCHRIFT

(11) **EP 1 488 943 B1**
(45) Veröffentlichungstag und Bekanntmachung des Hinweises auf die Patenterteilung: **12.07.2006**
(21) Anmeldenummer: 04013301.9
(22) Anmeldetag: 05.06.2004
(51) Int. Cl.: B60D 1/54

(54) **Hilfskraftbetätigte Anhängekupplung für Kraftfahrzeuge**
Motorised trailer hitch
Dispositif d'attelage motorisé pour véhicules

(30) Priorität: 20.06.2003 DE 10327706
(43) Veröffentlichungstag der Anmeldung: 22.12.2004
(73) Patentinhaber: Westfalia Automotive GmbH & Co. KG, 33378 Rheda-Wiedenbrück (DE)
(72) Erfinder: Hermbusch, Gerhard, 33449 Langenberg (DE); Weniger, Burkhard, 59514 Welver (DE)
(74) Vertreter: Elbertzhagen, Otto

(56) Entgegenhaltungen:
- DE-A- 10 243 044
- DE-A- 10 243 045
- DE-A- 19 605 570

## Beschreibung

Die Erfindung bezieht sich auf eine Anhängekupplung für Kraftfahrzeuge gemäß dem Oberbegriff des Patentanspruchs 1.

Aus dem Dokument DE 196 05 570 A1 ist eine solche Anhängekupplung bekannt. Die Antriebsvorrichtung mit der fahrzeugfesten Führungshülse und dem darin gehaltenen Führungsteil ist bei der bekannten Ausführung koaxial mit der Kupplungsstange angeordnet, womit die gesamte Anhängekupplung in der Einbaulage in der Fahrzeuglängsrichtung einen erheblichen Platz beansprucht. Zudem wird bei dieser Ausführung der Ausschub bzw. Einzug des mit der Kupplungsstange festen Führungsteils nur dazu genutzt, die Kupplungsstange in der Fahrzeuglängsrichtung zu verfahren, eine Veränderung der Höhenlage der gekrümmten Kupplungsstange am Fahrzeug ist damit nicht möglich.

Der Erfindung liegt deshalb die Aufgabe zugrunde, eine Anhängekupplung der eingangs genannten Art zu schaffen, die in kompakter Bauform ausführbar ist und vor allem in Fahrzeuglängsrichtung gesehen weniger Platz beansprucht.

Diese Aufgabe wird mit einer Anhängekupplung gelöst, welche die Gesamtheit der Merkmale des Patentanspruchs 1 aufweist.

Für die Erfindung ist wesentlich, daß das Führungsteil, an welchem das Befestigungsende der Kugelstange senkrecht abstehend festgelegt ist, bei der Verschiebung einen Weg mit einer Wegkomponente durchfährt, die senkrecht zur Fahrzeugaufstandsebene steht, also in der Normallage des Fahrzeugs vertikal ausgerichtet ist. Dadurch wird die Kugelstange mit ihrem gekrümmten Abschnitt und der endseitigen Kugel beim Verschieben des Führungsteils um einen erheblichen Betrag in der Fahrzeughöhenrichtung verfahren, wobei sie in der eingeschwenkten Ruheposition höher als in der ausgeschwenkten Arbeitsstellung angeordnet ist. Damit ist der Vorteil verbunden, in der Ruheposition die Kugelstange mit der Kugel möglichst nicht sichtbar am Fahrzeugheck unterzubringen. Weiter ist wichtig, daß in der abgesenkten Arbeitsstellung die Kugelstange mit der Längsachse ihres Befestigungsendes und mit der Krümmungsebene ihres gekrümmten Abschnitts in einer Ebene sich befindet, die gleich der durch die Fahrzeuglängsmitte gehenden Vertikalebene bezogen auf eine horizontale Fahrzeugaufstandsebene ist.

Weitere vorteilhafte Ausgestaltungsmerkmale der Erfindung ergeben sich aus den Unteransprüchen. Hierin ist besonders die zusätzliche Verriegelung der Kugelstange in der Arbeitsstellung zu erwähnen, die eine hohe Stabilität der Anhängekupplung im Anhängebetrieb gewährleistet.

Die Erfindung wird nachfolgend anhand der Zeichnung an einem Ausführungsbeispiel noch näher erläutert. Dabei zeigen:
- Fig. 1: eine perspektivische Darstellung einer An hängekupplung bezogen auf die Einbaulage schräg von hinten gesehen in ausgeschwenkter Arbeitsstellung der Kugelstange,
- Fig. 2: eine der Fig. 1 entsprechende Darstellung der Anhängekupplung jedoch in eingeschwenkter Ruheposition der Kugelstange,
- Fig. 3: eine Einzelheit am Führungsteil der Antriebsvorrichtung der Kugelstange der dargestellten Anhängevorrichtung,
- Fig. 4: einen Längsschnitt durch die Antriebsvorrichtung der Kugelstange der Anhängevorrichtung,
- Fig. 5: die Rückansicht der Anhängekupplung in der Ruheposition,
- Fig. 6: die Seitansicht der Anhängekupplung gem. Fig. 5,
- Fig. 7: die Rückansicht der Anhängekupplung in der Arbeitsstellung und

- Fig. 8: die Seitansicht der Anhängekupplung gemäß Fig. 7.

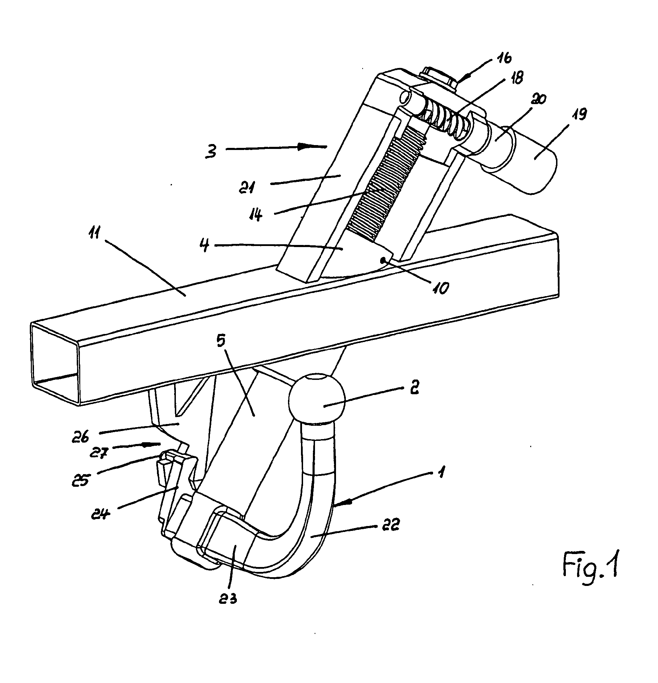

Im einzelnen erkennt man an der Anhängevorrichtung u.a. in Fig. 1 eine Kugelstange 1, die an ihrem freien Ende eine Kugel 2 zur Aufnahme eines anhängerseitigen Kupplungsteils trägt. Die Kugelstange 1 ist gekrümmt, wobei der Bogenwinkel zwischen den Enden der Kupplungsstange etwa 90° beträgt. Die Kugelstange 1 kann motorisch so₋ wohl verschoben als auch verschwenkt werden. Dazu dient eine Antriebsvorrichtung 3 mit einer fahrzeugfesten Führungshülse 4, in der ein Führungsteil 5, welches ebenso wie die Bohrung der Führungshülse 4 zylindrisch ist, koaxial verschoben und um die Zylinderachse verdreht werden kann. Die Führungshülse 4 ist an einem Querträger 11 festgelegt, der am Heck des betreffenden Fahrzeugs quer zur Fahrzeuglängsachse sowie parallel zur Fahrzeug-Aufstandsebene fest angebracht wird.

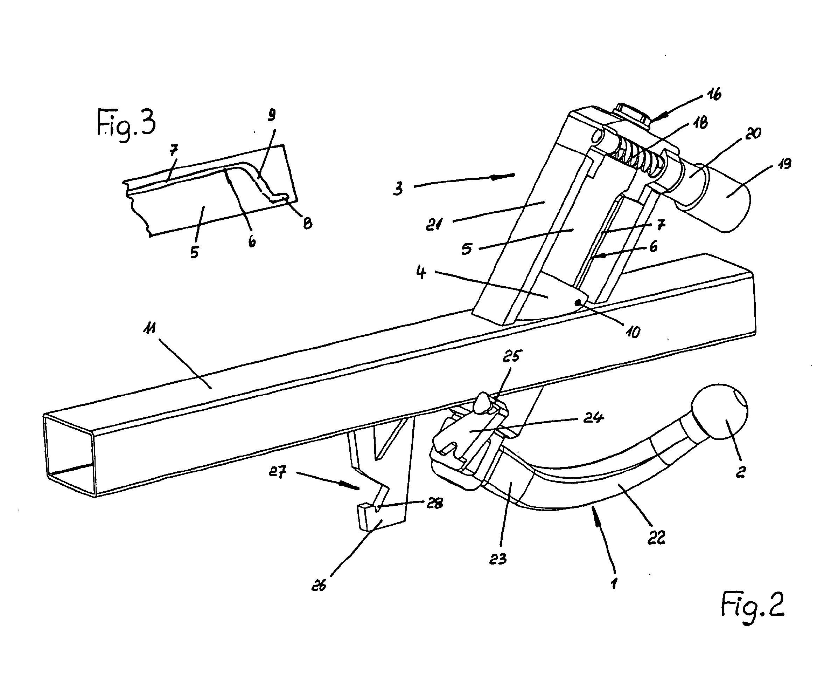

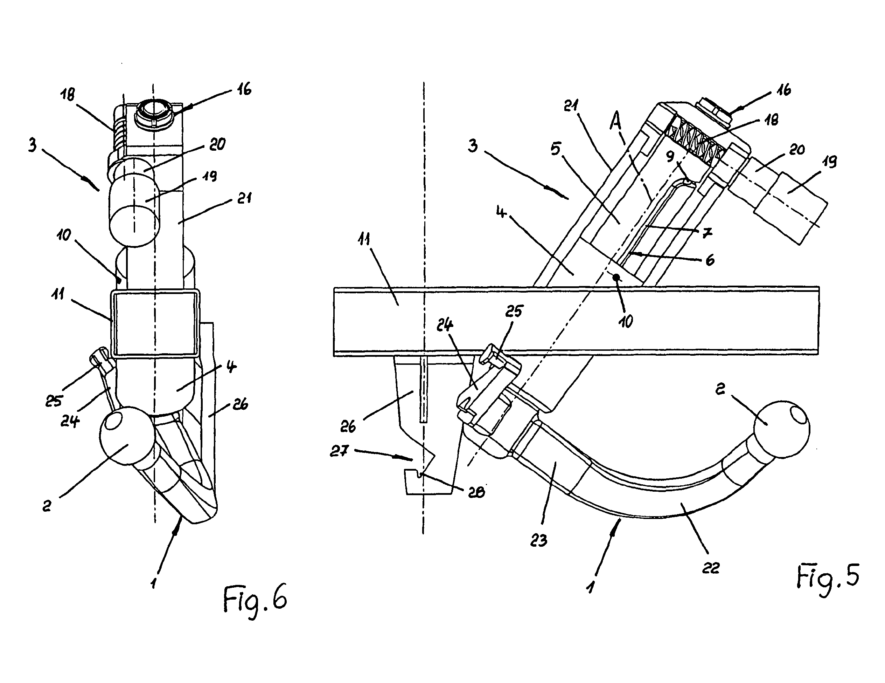

Wie die Figuren 2 und 3 deutlich machen, hat das Führungsteil 5 an seiner Außenseite eine Nut 6, die einen langen, parallel zur Achse des Führungsteils 5 verlaufenden Abschnitt 7 aufweist. Dieser Nut-Abschnitt 7 geht in einen S-förmig geschwungen Nutabschnitt 9 über, wie sich aus den Figuren 3 und 5 ergibt. Dieser Nutabschnitt 9 erstreckt sich im wesentlichen in Umfangsrichtung des Führungsteils 5, er hat jedoch ähnlich wie eine Schraubenlinie eine axiale Steigung. Über den S-förmig geschwungenen Abschnitt 9 hinweg setzt sich die Nut 6 in einem weiteren, achsparallelen kurzen Abschnitt 8 fort, wie aus Fig. 3 hervorgeht. In der Führungshülse 4 sitzt ein Nutenstein 10 oder ein Führungsbolzen oder -stift mit gleicher Funktion, der im Innern der Bohrung der Führungshülse 4 vorsteht und in die Nut 6 des Führungsteils 5 eingreift. So sorgt die Nut 6 im Zusammenwirken mit dem Nutenstein 10 dafür, daß aus der in Fig. 1 dargestellten Position das Führungsteil 5 gemäß dem langen Nutabschnitt 7 entlang einem längeren Weg in axialer Richtung verschoben werden kann, wobei beim Eintritt des Nutensteins 10 in den S-förmig gekrümmten Abschnitt 9 der Nut 6 ein Verdrehen des Führungsteils 5 um einen Winkel von etwa 90° erzwungen wird, wonach dann bei weiterer axialer Verschiebung des Führungsteils 5 sich der achsparallele Endabschnitt 8 der Führungsnut 6 über den Nutenstein 10 schiebt. Diese Endlage des Führungsteils 5 entspricht der Ruheposition der Kugelstange 1, die nach Verschieben des Führungsteils 5 in die entgegengesetzte Richtung erreichte Endlage ist diejenige, in der die Kugelstange 1 in der abgesenkten, ausgeschwenkten Arbeitsstellung sich befindet.

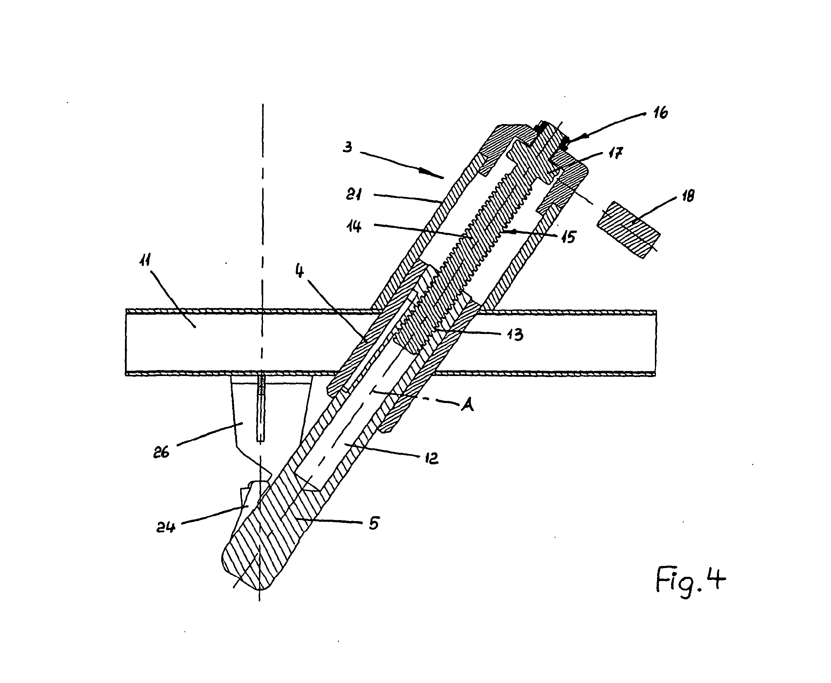

Wie insbesondere Fig. 4 deutlich macht, ist das verschiebliche und verdrehbare Führungsteil 5 als Hohlspindel ausgebildet. So hat das Führungsteil 5 eine Axialbohrung, die an demjenigen Ende des Führungsteils 5 offen ist, welches vom Befestigungsende der Kugelstange 1 abliegt. Im Bereich dieses offenen Endes weist das Führungsteil 5 ein Innengewinde 13 auf. Darin greift eine Gewindespindel 14 mit einem Außengewinde 15 ein, die an dem von dem Führungsteil 5 abliegenden Ende in einem fahrzeugfesten Lager 16 axial fest jedoch drehbar gelagert ist. Nahe dem Lager 16 sitzt auf der Gewindespindel 14 ein Schneckenrad 17, in das in dazu tangentialer Richtung eine drehend antreibbare Schnecke 18 eingreift. Wie u. a. aus den Figuren 1 und 2 hervorgeht, wird die Schnecke 18 von einem Antriebsmotor 19, bei dem es sich insbesondere um einen Elektromotor handelt, angetrieben, der gegebenenfalls über ein zwischengeschaltetes Getriebe 20 mechanisch mit der Schnecke 18 gekuppelt ist.

Wird über den Antriebsmotor 19 die Gewindespindel 14 gedreht, bedingt dies eine Verschiebung des Führungsteils 5 in der fahrzeugfesten Führungshülse 4. Über die vorstehend beschriebene Nut 6 im Zusammenwirken mit dem Nutenstein 10 kann zugleich über den geschwungenen Nutabschnitt 9 infolge der Verschiebung des Führungsteils 5 dessen Drehung um etwa 90° erzwungen werden. Hierbei ist der S-förmig geschwungene Abschnitt 9 der Führungsnut 6 so angeordnet, daß die Verdrehung des Führungsteils 5 beim Ausschieben nach unten hin kurz vor Erreichen der Arbeitsstellung bzw. beim Einzug kurz nach dem Verlassen der Arbeitsstellung erfolgt.

Die Gewindespindel 14 ist in einem Spindelgehäuse 21 angeordnet, welches koaxial an die Führungshülse 4 an schließt und ebenfalls fest mit dem Querträger 11 verbunden ist. Am Ende des Spindelgehäuses 21 befindet sich das die Gewindespindel 14 unverschieblich jedoch drehbar halternde Lager 16.

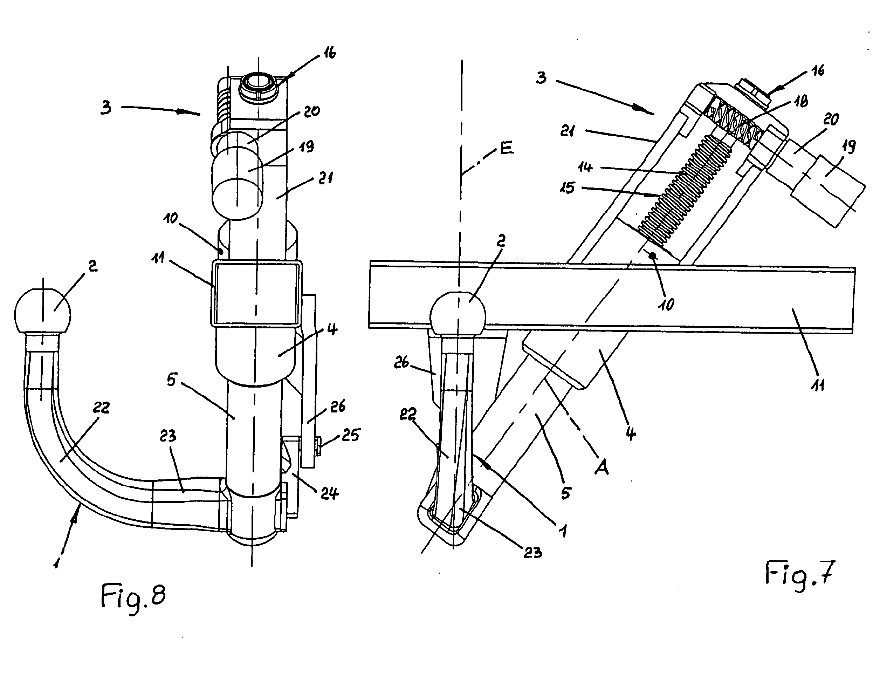

Die Achse, um welche das Führungsteil 5 verschwenkt wird und in deren Richtung sich das Führungsteil 5 verschiebt, ist in den Figuren 4 und 7 insbesondere dargestellt und dort mit "A" bezeichnet. Diese Achse A nimmt eine besondere Lage zu der Kugelstange 1 ein, um die gesamte Anhängekupplung besonders kompakt ausführen zu können. Dazu gehört auch, daß der Antriebsmotor 19 mit seiner Achsrichtung senkrecht auf einer Axialebene der Gewindespindel 14 steht und hierbei an derjenigen Seite des Spindelgehäuses 21 angeordnet ist, die zum Querträger 11 hin, also nach unten hin liegt.

Die Kugelstange 1 besteht aus einem zur Kugel 2 hin liegenden, gekrümmten Stangenabschnitt 22, an den sich an dem von der Kugel 2 abgelegenen Ende ein Befestigungsende 23 mit einer geraden Längsachse anschließt. Das Befestigungsende 23 steht mit seiner Längsachse senkrecht zur der Verschiebe- und Schwenkachse A des Führungsteils 5, dementsprechend schließt die Kugelstange 1 mit ihrem Befestigungsende 23 rechtwinklig an das längliche, gerade Führungsteil 5 an. Das Führungsteil 5 stellt sozusagen den verschiebbaren und verdrehbaren Achskörper für die Kugelstange 1 dar, an dessen Unterende die Kugelstange 1 abgewinkelt befestigt ist.

Die in einem Bogen verlaufende Längsachse des gekrümmten Stangenabschnitts 22 und die diese Längsachse fortsetzende Längsachse des Befestigungsendes 23 der Kugelstange 1 liegen in einer gemeinsamen Ebene, und diese Ebene ist in Fig. 7 mit "E" kenntlich gemacht. Die Ebene E verläuft in der Normallage des Fahrzeugs senkrecht zur Fahrzeugaufstandsebene, also in Richtung einer Vertikalebene, sofern sich die Anhängekupplung bzw. die Kugelstange 1 mit der Kugel 2 in der Arbeitsstellung befinden. Zugleich schneidet diese Ebene E in der Arbeitsstellung die mittige Fahrzeuglängsachse, so daß sich Kugelstange 1 und Kugel 2 in der Arbeitsstellung exakt in der vertikalen Fahrzeugmittenebene befinden. Zu der Ebene E steht die Verschiebe- und Schwenkachse A des Führungsteils 5 unter einem spitzen Winkel, der in dem Bereich von 30° bis 40° liegt. Den gleichen spitzen Winkel schließen die Verschiebe- und Schwenkachse A des Führungsteils 5 und entsprechend die Achse der Führungshülse 4 mit der Längsachse des Querträgers 11 ein. Folglich steht der Querträger 11 mit seiner Längsachse senkrecht auf der Ebene E.

Die Neigung der Verschiebe- und Schwenkachse A des Führungsteils 5 führt beim Verschwenken aus der Arbeitsstellung heraus dazu, daß sich die Kugelstange 1 insbesondere mit ihrem gekrümmten Stangenabschnitt 22 und der Kugel 2 auf einer Schwenkbahn nach unten hin bewegt. Dadurch kann die Kugel 2 unter einem Hindernis hindurchtauchen, das in Gestalt der Unterkante eines Fahrzeugstoßfängers bestehen kann. Dieses Absenken der Kugel 2 wird nach Beendigung des Schwenkvorganges durch das Verschieben der Kugelstange 1 nach oben zur Ruheposition hin wieder kompensiert, wenn nach Beendigung der Schwenkbewegung über die Gewindespindel 14 das Führungsteil 5 innerhalb der Führungshülse 4 weiter nach oben gezogen wird.

Grundsätzlich kann die Kugelstange 1 gegen unbeabsichtigtes Verdrehen durch den Formschluß zwischen dem Nutenstein 10 der Führungshülse 4 und der Nut 6 an der Außenseite des Führungsteils 5 gesichert sein. Dies gilt, solange sich der Nutenstein 10 in den geraden Nutabschnitten 7 und 8 befindet. Wichtig ist hierbei die Verdrehsicherung der Kugelstange 1 in der ausgeschwenkten Arbeitsstellung, für die eine zusätzliche Verriegelungseinrichtung vorhanden ist.

Das Befestigungsende 23 der Kugelstange 1 ist durch das Unterende des Führungsteils 5 quer durchgesteckt und an dem freistehenden Endteil des Befestigungsendes 23 sitzt fest ein Arm 24, der nahezu parallel neben dem unteren Bereich des Führungsteils 5 angeordnet ist. Am Ende des Arms 24 befindet sich ein Verriegelungsteil 25, welches an derjenigen Seite des Arms 24 nach außen hin vorsteht, die von demjenigen Bereich der Kugelstange 1 abliegt, der die Kugel 2 trägt. Beim Verschieben und Verschwenken des Führungsteils 5 bewegt sich das Verriegelungsteil 25 entlang einer Raumkurve, die in der Arbeitsstellung an einem Gegenlager 26 endet, welches fahrzeugfest in Gestalt einer stabilen Lasche am Querträger 11 fest angeordnet ist. Das Gegenlager 26 hat eine einendig offene Kulisse 27, in welche das Verriegelungsteil 25 am Führungsteil 5 bei Erreichen derjenigen Schwenkstellung eintaucht, die der Arbeitsstellung entspricht. Hiernach erfolgt noch ein weiteres Verschieben des Führungsteils 5, bei dem sich der Endabschnitt 8 der Führungsnut 6 an der Außenseite des Führungsteils 5 über den Nutenstein 10 der Führungshülse 4 schiebt. Dies hat zur Folge, daß das Verriegelungsteil 25 in einen Verriegelungsabschnitt 28 der Kulisse 27 des Gegenlagers 26 eintaucht, was einem formschlüssigen Einhaken des Verriegelungsteils in die Kulisse 27 gleichkommt. Denn der Verriegelungsabschnitt 28 der Kulisse 27 ist nach Art eines Hakenmauls gestaltet, welches das Verriegelungsteil 25 am Führungsteil 5 derart in seitlicher Richtung umfängt, daß ein seitliches Spiel des Verriegelungsteils 25 unterbunden und entsprechend das Führungsteil 5 mitsamt der Kugelstange 1 in der Arbeitsstellung gegen ein Verdrehen blockiert ist.

Ein Verschwenken des Führungsteils 5 mitsamt der Kugelstange 1 ist erst dann wieder möglich, wenn das Verriegelungsteil 25 nach oben aus dem Verriegelungsabschnitt 28 der Kulisse 27 des Gegenlagers 26 herausgehoben ist. Diese Bewegung tritt dann ein, wenn über das Verdrehen der Gewindespindel 14 das Führungsteil 5 nach oben hin gezogen wird, wobei der Nutenstein 10 der Führungshülse 4 aus dem kurzen geraden Abschnitt 8 der Führungsnut 6 des Führungsteils 5 freikommt. Erst danach beim Übertritt des Nutensteins 10 in den S-förmig geschwungenen Abschnitt 9 der Führungsnut 6 tritt die Schwenkbewegung des Führungsteils 5 ein, wobei das mitschwenkende Verriegelungsteil 25 kollisionsfrei aus der Kulisse 27 des Gegenlagers 26 herausgehoben wird.

## Patentansprüche

1. Anhängekupplung für Kraftfahrzeuge mit einer Kugelstange (1), an deren freiem Ende eine Kugel (2) zur Aufnahme eines hängerseitigen Kupplungsteils angeordnet ist und die mit ihrem zweiten Ende mit einer hilfskraftbetätigten Antriebsvorrichtung (3) zum Verschwenken und Verschieben der Kugelstange (1) samt Kugel (2) von einer Arbeitsstellung in eine Ruheposition und zurück verbunden ist, wozu eine fahrzeugfeste Führungshülse (4) vorgesehen ist, in der ein mit der Kugelstange (1) festes, längliches Führungsteil (5) gehalten ist, welches in Richtung seiner Längsachse (A) verschieblich wie auch um diese Achse (A) verdrehbar in der Führungshülse (4) geführt ist, wobei an einem ersten der beiden Führungselemente (4, 5) eine Führungsnut (6) mit zwei achsparallelen, in Umfangsrichtung des Führungselementes (4 oder 5) zueinander versetzten Abschnitten (7, 8), die über einen S-förmig geschwungenen Abschnitt (9) mit einem in Umfangsrichtung verlaufenden Bereich mit axialer Steigung ineinander übergehen, vorgesehen und an dem zweiten Führungselement (4, 5) ein in diese Führungsnut (6) eingreifender Nutenstein (10) fest angeordnet ist, wobei ferner die Kugelstange (1) einen zur Kugel (2) hin liegenden, gekrümmten Stangenabschnitt (22) mit einer entsprechend in einem Bogen verlaufenden Längsachse, die sich in einer Ebene krümmt, und ein an dem Führungsteil (5) fest angeordnetes Befestigungsende (23) mit gerader Längsachse aufweist, die in der Krümmungsebene des Stangenabschnitts (22) verläuft,
**dadurch gekennzeichnet,**
**daß** das Befestigungsende (23) der Kugelstange (1) senkrecht zur Verschiebe- und Schwenkachse (A) des Führungsteils(5) steht und die Krümmungsebene des Stangenabschnitts (22) der Kugelstange (1) in der Arbeitsstellung bezogen auf die Einbaulage die mittige Fahrzeuglängsachse schneidet und senkrecht zur Fahrzeugaufstandsebene steht, wobei die Verschiebe- und Schwenkachse (A) des Führungsteils (5) unter einem spitzen Winkel zu der Krümmungsebene des Stangenabschnitts (22) der Kugelstange (1) steht.

2. Anhängekupplung nach Anspruch 1,
**dadurch gekennzeichnet,**
**daß** die Führungshülse (4) an einem fahrzeugfesten Querträger (11) zu dessen Längsachse unter dem gleichen spitzen Winkel befestigt ist, der zwischen der Krümmungsebene des Stangenabschnitts (22) der Kugelstange (1) und der Verschiebe- und Schwenkachse (A) des Führungsteils (5) besteht.

3. Anhängekupplung nach Anspruch 1 oder 2,
**dadurch gekennzeichnet,**
**daß** im Befestigungsbereich der Kugelstange (1) an dieser oder an dem Führungsteil (5) ein Verriegelungsteil (25) an der von der Kugel (2) abgewandten Seite vorsteht und ein fahrzeugfest anzubringendes Gegenlager (26) vorgesehen ist, welches eine einendig offene Kulisse (27) hat, die zur formschlüssigen Aufnahme des Verriegelungsteils (25) eine an die Schwenkung und Verschiebung des Verriegelungsteils (25) beim Erreichen oder Verlassen der Arbeitsstellung angepaßte Kontur hat.

4. Anhängekupplung nach Anspruch 3,
**dadurch gekennzeichnet,**
**daß** das Gegenlager (26) für das Verriegelungsteil (25) am Querträger (11) fest angeordnet ist.

5. Anhängekupplung nach einem der Ansprüche 1 - 4,
**dadurch gekennzeichnet,**
**daß** die Führungsnut (6) am Führungsteil (5) angeordnet ist und einen von dem S-förmigen Abschnitt (9) aus in Richtung zur Befestigungsstelle der Kugelstange (1) hin dem Verschiebeweg entsprechenden, langen Abschnitt (7) und einen in entgegengesetzter Richtung an den S-förmigen Abschnitt (9) anschließenden kurzen Abschnitt (8) aufweist, der einen zusätzlichen, axialen Verriegelungsweg bzw. Entriegelungsweg des Führungsteils (5) beim Erreichen oder Verlassen der Arbeitsstellung erzwingt, wobei diesem Verriegelungs- bzw. Entriegelungsweg ein das Verriegelungsteil (25) gegen ein Verschwenken des Führungsteils (5) blockierender Verriegelungsabschnitt (28) der Kulisse (27) des fahrzeugfesten Gegenlagers (26) entspricht.

6. Anhängekupplung nach einem der Ansprüche 1 - 5,
**dadurch gekennzeichnet,**
**daß** das Führungsteil (5) als Hohlspindel mit einer am von der Kugelstange (1) wegliegenden Ende offenen Axialbohrung (12) ausgebildet ist, die zumindest im Bereich dieses offenen Endes mit einem Innengewinde (13) versehen ist, und daß eine in die Axialbohrung (12) der Hohlspindel (5) eintauchende, mit deren Innengewinde (13) zusammenwirkende Gewindespindel (14) mit ihrem von der Hohlspindel (5) abliegenden Ende in einem fahrzeugfesten Lager (16) axial fest sowie drehbar gelagert ist, die mit einem Antriebsmotor (19) gekuppelt ist.

7. Anhängekupplung nach Anspruch 6,
**dadurch gekennzeichnet,**
**daß** das Lager (16) der Gewindespindel (14) an einem Spindelgehäuse (21) angeordnet ist, welches in axialer Verlängerung an die Führungshülse (4) anschließt.

8. Anhängekupplung nach Anspruch 6 oder 7,
**dadurch gekennzeichnet,**
**daß** nahe dem Lager (16) auf der Gewindespindel (14) ein Schneckenrad (17) sitzt, in welches eine Schnecke (18) eingreift, die mit dem Antriebsmotor (19) verbunden ist.

9. Anhängekupplung nach Anspruch 8,
**dadurch gekennzeichnet,**
**daß** der Antriebsmotor (19) außen am Spindelgehäuse (21) an der zum Querträger (11) hin liegenden Seite quer zu einer durch die Verschiebe- und Schwenkachse (A) der Hohlspindel (5) hindurchgehenden Axialebene angeordnet ist.

## Claims

1. Trailer hitch for motor vehicles with a ball rod (1) which is provided at its free end with a ball (2) for receiving a coupling part on the trailer side and which by its second end is connected to a secondary-force-actuated drive device (3) for pivoting and displacing the ball rod (1) together with the ball (2) from a work position to a rest position and back again, for which a guide sleeve (4) is provided fixed on the vehicle in which an oblong guide part (5) is held which is secured with the ball rod (1) and which is guided displaceable in the direction of its longitudinal axis (A) and also rotatable about this axis (A) in the guide sleeve (4) whereby on a first of the two guide elements (4,5) there is a guide groove (6) with two axially parallel sections (7,8) which are off set relative to one another in the circumferential direction of the guide element (4 or 5) and which run into one another via an S-shaped section (9) with a circumferentially aligned area with axial pitch, and on the second guide element (4,5) there is a fixedly mounted grooved block (10) which engages in this guide groove (6) whereby furthermore the ball rod (1) has a curved rod section (22) lying towards the ball (2) with a correspondingly curved longitudinal axis which curves in one plane, and a fixing end (23) fixedly mounted on the guide part (5) with a straight longitudinal axis which runs in the curvature plane of the rod section (22),
**characterised in that**
the fixing end (23) of the ball rod (1) stands perpendicular to the slide and swivel axis (A) of the guide part (5) and the curvature plane of the rod section (22) of the ball rod (1) in the work position in relation to the installation position intersects the central vehicle longitudinal axis and stands at right angles to the vehicle upright plane wherein the slide and pivotal axis (A) of the guide part (5) stands at an acute angle to the curvature plane of the rod section (22) of the ball rod (1).

2. Trailer hitch according to claim 1,
**characterised in that**
the guide sleeve (4) is fixed on a cross member (11) fixed on the vehicle at the same acute angle to the longitudinal axis which exists between the curvature plane of the rod section (22) of the ball rod (1) and the slide and pivotal axis (A) of the guide part (5).

3. Trailer hitch according to claim 1 or 2,
**characterised in that**
in the fixing region of the ball rod (1) on same or on the guide part (5) a locking part (25) projects on the side remote from the ball (2) and a counter bearing (26) is provided which is to be attached secured on the vehicle and which has a slide guide (17) which is open at one end and which for positively holding and locking the locking part (25) has a contour which is adapted to the pivotal and sliding movement of the locking part (25) on reaching or leaving the work position.

4. Trailer hitch according to claim 3,
**characterised in that**
the counter bearing (26) for the locking part (25) is mounted fixed on the cross member (11).

5. Trailer hitch according to one of claims 1 to 4,
**characterised in that**
the guide groove (6) is mounted on the guide part (5) and has a long section (7) which corresponds to the displacement path from the S-shaped section (9) towards the fixing point of the ball rod (1), and a short section (8) which adjoins the S-shaped section (9) in the opposite direction and which forces an additional axial locking path or unlocking path of the guide part (5) on reaching or leaving the work position whereby to this locking or unlocking path corresponds a locking section (28) of the slide guide (27) of the counter bearing (26) fixed on the vehicle which (locking section) blocks the locking part (25) against pivoting of the guide part (5).

6. Trailer hitch according to one of claims 1 to 5,
**characterised in that**
the guide part (5) is formed as a hollow spindle with an axial bore (12) which is open at the end remote from the ball rod (1) and which is provided at least in the region of this open end with an internal thread (13), and that a threaded spindle (14) which projects into the axial bore (12) of the hollow spindle (5) and interacts with the internal thread (13) thereof, is mounted by its end remote from the hollow spindle (5) axially fixed and rotatable in a bearing (16) which is fixed on the vehicle, which is coupled to a drive motor (19).

7. Trailer hitch according to claim 6,
**characterised in that**
the bearing (16) of the threaded spindle (14) is mounted on a spindle housing (21) which in an axial extension follows onto the guide sleeve (4).

8. Trailer hitch according to claim 6 or 7,
**characterised in that**
close to the bearing (16) on the threaded spindle (14) is seated a worm wheel (17) in which a worm (18) engages which is connected to the drive motor (19).

9. Trailer hitch according to claim 8,
**characterised in that**
the drive motor (19) is mounted outside on the spindle housing (21) on the side towards the cross member (11) transversely to an axial plane which passes through the slide and swivel axis (A) of the hollow spindle (5).

## Revendications

1. Dispositif d'attelage pour véhicules automobiles, avec une barre d'attelage à rotule (1) à l'extrémité libre de laquelle est agencée une rotule (2) pour accueillir un élément d'accouplement côté remorque, et qui, avec sa deuxième extrémité est reliée à un dispositif d'entraînement (3) actionné par une force auxiliaire pour le pivotement et le déplacement de la barre d'attelage à rotule (1), y compris la rotule (2), d'une position de travail à une position de repos, et inversement, ce pourquoi est prévu un manchon de guidage (4) fixé au véhicule automobile, dans lequel est maintenu un élément de guidage (5) allongé, solidaire de la barre d'attelage à rotule (1), qui, mobile dans la direction de son axe longitudinal (A), et pouvant pivoter autour de cet axe, est guidé dans le manchon de guidage (4), sur l'un des deux éléments de guidage (4, 5), étant prévue une rainure de guidage (6), avec deux sections (7, 8) à axes parallèles, décalées l'une par rapport à l'autre dans la direction périphérique de l'élément de guidage (4 ou 5), lesquelles par l'intermédiaire d'une section (9) en forme de S, avec une zone en pente axiale, s'étendant dans la direction périphérique, se rejoignent, et un écrou pour rainure (10) s'engageant dans cette rainure de guidage (6) étant agencé fixement sur le deuxième élément de guidage (4, 5), la barre d'attelage à rotule (1) présentant en outre une section de barre (22) courbée, orientée vers la rotule (2), avec un axe longitudinal qui, s'étendant adéquatement en forme d'arc, se courbe dans un plan, et une extrémité de fixation (23), à axe longitudinal droit, agencée fixement sur l'élément de guidage (5), qui s'étend dans le plan de courbure de la section de barre (22),
**caractérisé en ce que**
l'extrémité de fixation (23) de la barre d'attelage à rotule (1) est perpendiculaire à l'axe de déplacement et de pivotement (A) de l'élément de guidage (5), et le plan de courbure de la section de barre (22) de la barre d'attelage à rotule (1), en position de travail par rapport à la position de montage coupe l'axe longitudinal médian du véhicule automobile et est perpendiculaire au plan d'assiette du véhicule automobile, l'axe de déplacement et de pivotement (A) de l'élément de guidage (5) formant un angle aigu par rapport au plan de courbure de la section de barre (22) de la barre d'attelage à rotule (1).

2. Dispositif d'attelage selon la revendication 1,
**caractérisé en ce que**
le manchon de guidage (4) est fixé à une traverse (11) solidaire du véhicule automobile, en formant par rapport à l'axe longitudinal de celle-ci le même angle aigu que celui qui existe entre le plan de courbure de la section de barre (22) de la barre d'attelage à rotule (1) et l'axe de déplacement et de pivotement (A) de l'élément de guidage (5).

3. Dispositif d'attelage selon revendication 1 ou 2,
**caractérisé en ce que**,
dans la zone de fixation de la barre d'attelage à rotule (1), sur celle-ci ou sur l'élément de guidage (5), un organe de verrouillage (25) fait saillie sur le côté opposé à la rotule (2), et qu'est prévu un contre-appui (26), à fixer au véhicule automobile, lequel présente une coulisse (27) qui, ouverte à une extrémité, présente, pour accueillir par emboîtement l'organe de verrouillage (25), un contour adapté au pivotement et au déplacement de l'organe de verrouillage (25) lorsque la position de travail est atteinte ou quittée.

4. Dispositif d'attelage selon la revendication 3,
**caractérisé en ce que**
le contre-appui (26) pour l'organe de verrouillage (25) est fixé sur la traverse (11).

5. Dispositif d'attelage selon l'une des revendications 1 à 4,
**caractérisé en ce que**
la rainure de guidage (6) est disposée sur l'élément de guidage (5) et présente une longue section (7) correspondant au parcours de déplacement, qui s'étend à partir de la section en forme de S (9) dans la direction du point de fixation de la barre d'attelage à rotule (1), et une courte section s'étendant dans la direction opposée, et faisant suite à la section en forme de S (9), qui produit une course de verrouillage respectivement une course de déverrouillage axial supplémentaire de l'élément de guidage (5) pour atteindre ou pour quitter la position de travail, une section de verrouillage (28) de la coulisse (27) du contre-palier (26) solidaire du véhicule automobile, qui correspond à cette course de verrouillage, respectivement de déverrouillage, bloquant l'élément de verrouillage (25) à l'encontre d'un pivotement de l'élément de guidage (5).

6. Dispositif d'attelage selon l'une des revendications 1 à 5,
**caractérisé en ce que**
l'élément de guidage (5) est conçu en tant que broche creuse avec un alésage axial (12) ouvert à l'extrémité éloignée de la barre d'attelage à rotule (1), qui, au moins dans la zone de cette extrémité ouverte, est pourvu d'un filet intérieur (13), et **en ce qu'**une tige filetée (14), pénétrant dans l'alésage axial (12) de la broche creuse (5), en coopérant avec le filet intérieur (13), est montée fixement dans la direction axiale, à rotation, dans un palier (16) solidaire du véhicule automobile, et est couplée avec un moteur de commande (19).

7. Dispositif d'attelage selon la revendication 6,
**caractérisé en ce que**
le palier (16) de la tige filetée (14) est agencé sur un carter de broche (21) qui, en prolongement axial, fait suite au manchon de guidage (4).

8. Dispositif d'attelage selon revendication 6 ou 7,
**caractérisé en ce que**,
près du palier (16), sur la tige filetée (14), est installée une roue hélicoïdale (17), dans laquelle s'engage un vis sans fin (18) qui est reliée au moteur de commande (19).

9. Dispositif d'attelage selon la revendication 8,
**caractérisé en ce que**
le moteur de commande (19) est agencé, à l'extérieur du carter de broche (21), sur le côté orienté vers la traverse (11), perpendiculairement à un plan axial traversant l'axe de déplacement et de pivotement (A) de la broche creuse (5).
